# EUROPEAN PATENT APPLICATION

(11) **EP 4 546 442 A1**
(43) Date of publication of application: **30.04.2025**
(21) Application number: 24826065.5
(22) Date of filing: 07.03.2024
(51) Int. Cl.: H01M 4/131, H01M 4/525, H01M 4/505, H01M 10/0569, H01M 10/0568, H01M 10/0567, H01M 10/052, H01M 4/36, H01M 4/587, H01M 4/38

(54) **LITHIUM SECONDARY BATTERY HAVING IMPROVED SAFETY**

(30) Priority: 22.06.2023 KR 20230080465
(71) Applicant: LG Energy Solution, Ltd., Seoul 07335 (KR)
(72) Inventor: JEONG, You Kyeong, Daejeon 34122 (KR); LEE, Chul Haeng, Daejeon 34122 (KR); AHN, Kyoung Ho, Daejeon 34122 (KR); HAN, Jun Hyeok, Daejeon 34122 (KR); OH, Young Ho, Daejeon 34122 (KR); KO, Yoon Seok, Daejeon 34122 (KR); IM, Tae Yeong, Daejeon 34122 (KR)
(74) Representative: Hoffmann Eitle
(86) International application number: PCT/KR2024/002947
(87) International publication number: WO 2024/262740

(57) **Abstract**

The present invention relates to a lithium secondary battery. The lithium secondary battery has the advantage of including an NCM-based anode active material with a high content of nickel (Ni) in the positive electrode, which has an excellent energy density, and the effect of controlling the heat flow rate between the positive electrode active material and the electrolyte composition to a predetermined range, thereby improving the safety problem caused by the positive electrode active material at high temperatures.

## Description

### [Technical Field]

The present disclosure relates to a lithium secondary battery with high energy density and improved high temperature safety.

This application is based on and claims priority from Korean Patent Application No. 10-2023-0080465, filed on June 22, 2023, the disclosure of which is incorporated herein in its entirety by reference.

### [Background Technology of the Invention]

In recent years, secondary batteries have been widely applied in small scale devices such as portable electronics, as well as in medium and large sized devices such as battery packs or power storage in hybrid or electric vehicles.

These secondary batteries are manufactured by applying a composition containing an electrode active material to a suitable thickness and length on a current collector and drying the composition, or by forming the electrode active material itself into a film to manufacture the electrodes including a positive electrode and a negative electrode, and winding or laminating the electrodes with an insulating separator therebetween to provide an electrode assembly. The electrode assembly is then placed in a can or similar container and filled with an electrolyte to manufacture a secondary battery.

In order to apply the secondary batteries to medium and large-scale devices, the secondary batteries are required to have a high energy density, and as a result, a high capacity in the secondary batteries has been achieved by using, as a positive electrode active material, a layered lithium nickel metal oxide such as LiNiₐCo_{b}Mn_{c}O₂ (0.6<a≤0.9, a+b+c=1, hereinafter referred to as "NCM-based compounds") with a nickel (Ni) content of more than 60%.

### [Related-Art Document]

### [Patent Document]

Korean Patent Laid-open Publication No. 10-2018-0116564
Korean Patent Publication No. 10-2144056

### [Description of the Invention]

### [Technical Problem]

The present disclosure is to provide a lithium secondary battery having an improved energy density by including an NCM-based positive electrode active material having a relatively high content of nickel (Ni) in the positive electrode, as well as an improved safety by improving the structural collapse of the NCM-based active material at high temperatures or gas generation due to structural collapse.

### [Technical Solution]

According to an embodiment of the present disclosure, a battery, such as a lithium secondary batter includes:
an electrode assembly including a positive electrode, a negative electrode, and a separator disposed between the positive electrode and the negative electrode; and
an electrolyte composition with which the electrode assembly is impregnated,
in which the positive electrode has a positive electrode active layer provided on at least one side of a positive electrode collector, and including, as a positive electrode active material, a lithium metal oxide represented by Formula 1;
wherein the electrolyte composition contains a lithium salt and a non-aqueous organic solvent, the non-aqueous organic solvent containing, based on the total weight of the non-aqueous organic solvent, 60% by weight or more of a cyclic ester-based solvent represented by Formula 2;
wherein a heat flow is 6.0 W/g or less within a range of 200 °C to 300 °C as measured by a heat flow measurement for a mixture containing a 1:1 weight ratio of the positive electrode active material and the electrolyte composition in a 100% charged state:

   [Chemical Formula 1] Liₓ[Ni_{y}Co_{z}Mn_{w}M¹ᵥ]O₂

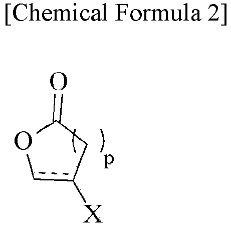

   in Formulas 1 and 2,
   M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
   x, y, z, w, and v satisfy 0.9≤x≤1.30, 0.6≤y<1, 0<z≤0.2, 0<w≤0.2, and 0≤v≤0.1, respectively, provided that y+z+w+v=1,
   - - - - represents a single bond or a double bond,
   X is hydrogen, fluorine, or vinyl; and
   p is an integer of 1 to 5.

In this case, the positive electrode active material may include at least one of LiNi_{0.95}Co_{0.03}Mn_{0.02}O₂, LiNi_{0.9}Co_{0.06}Mn_{0.04}O₂, LiNi_{0.9}Co_{0.05}Mn_{0.05}O₂, LiNi_{0.85}Co_{0.1}Mn_{0.05}O₂, LiNi_{0.85}Co_{0.05}Mn_{0.1}O₂, LiNi_{0.8}Co_{0.1}Mn_{0.1}O₂, LiNi_{0.75}Co_{0.1}Mn_{0.15}O₂, LiNi_{0.7}Co_{0.2}Mn_{0.1}O₂, LiNi_{0.7}Co_{0.15}Mn_{0.15}O₂, LiNi_{0.7}CO_{0.1}Mn_{0.2}O₂, LiNi_{0.6}Co_{0.2}Mn_{0.2}O₂, LiNi_{0.6}Co_{0.2}Mn_{0.1}Al_{0.1}O₂, LiNi_{0.6}Co_{0.2}Mn_{0.15}Al_{0.05}O₂, and LiNi_{0.7}Co_{0.1}Mn_{0.1}Al_{0.1}O₂.

Further, the cyclic ester-based solvent represented by Formula 2 may contain one or more of dihydrofuranone, vinyl dihydrofuranone, fluorodihydrofuranone, furanone, tetrahydropyranone, methyl dihydrofuranone, propyl tetrahydropyranone, and oxepanone.

Further, the lithium salt may contain Li⁺ as a cation, and at least one anion selected from BF₄⁻, B₁₀Cl₁₀⁻, ClO₄⁻, AlO₄⁻, AlCl₄⁻, PF₆⁻, SbF₆⁻, AsF₆⁻, BF₂C₂O₄⁻, B(C₂O₄)₂⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and ((C(CN))₂NC(CF₃))N⁻.

In one example, the lithium salt may contain Li⁺ as a cation, and an anion selected from BF₂C₂O₄⁻, B(C₂O₄)₂⁻, (CF₃SO₂)₂N⁻, (FSO₂)₂N⁻, (CF₃CF₂SO₂)₂N⁻, and ((C(CN))₂NC(CF₃)N⁻.

In another example, the lithium salt may contain Li⁺ as a cation, and at least two anions selected from BF₄⁻, B₁₀Cl₁₀⁻, ClO₄⁻, AlO₄⁻, AlCl₄⁻, PF₆⁻, SbF₆⁻, AsF₆⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻,CF₃SO₃⁻, C₄F₉SO₃⁻, CF₃CF₂SO₃⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, and SCN⁻.

Further, the non-aqueous organic solvent further contains at least one co-solvent selected from a fluorinated ether-based solvent, a fluorinated cyclic carbonate-based solvent, a linear carbonate-based solvent, a phosphate-based solvent, and a sulfone-based solvent.

In addition, the electrolyte composition may further contain an electrolyte additive represented by Formula 3: 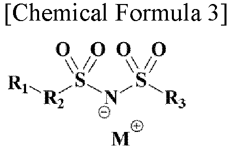 wherein, R₁ represents 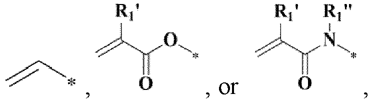
R₁' and R₁" independently represent hydrogen or a methyl group,
R₂ includes at least one of an arylene group having 6 to 20 carbon atoms; an aryleneoxy group having 6 to 20 carbon atoms; a heteroarylene group having 5 to 10 carbon atoms and at least one heteroatom of N, S, and O; a heteroaryleneoxy group having 5 to 10 carbon atoms and at least one heteroatom of N, S, and O; an alkylene group having 1 to 10 carbon atoms; an alkyleneoxy group having 1 to 10 carbon atoms; a cycloalkylene group having 5 to 10 carbon atoms; and 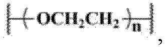
R₃ represents a fluoro group, an alkyl group having 1 to 10 carbon atoms, an alkoxy group having 1 to 10 carbon atoms, or 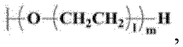 provided that at least one hydrogen atom contained in the alkylene group, alkyleneoxy group the alkyl group, alkoxy group, cycloalkylene group, 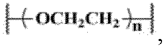 and 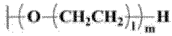 may be substituted with a fluorine atom,
M includes at least one selected from the group consisting of lithium, sodium, potassium, tetraalkylammonium having 1 to 4 carbon atoms, and tetraalkylphosphonium having 1 to 4 carbon atoms,
l is an integer of 1 to 6, and
m and n are independently an integer of 2 to 20.

Specifically, the electrolyte additive represented by Formula 3 may include one or more of compounds represented by Structural Formulas 1 to 17 below:

| | | | |
|---|---|---|---|
| <Structural Formula 1> | <Structural Formula 2> | <Structural Formula 3> | <Slructural Formula 4> |
| 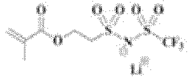 | 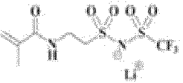 | 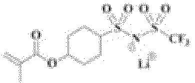 | 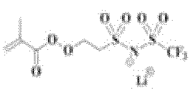 |
| <Structural Formula 5> | <Structural Formula 6> | <Structural Formula 7> | <Structural Formula 8> |
| 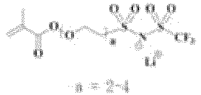 | 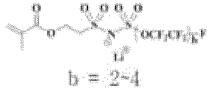 | 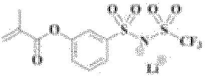 | 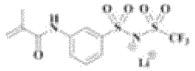 |
| <Structural Formula 9> | <Structural Formula 10> | <Structural Formula 11> | <Structural Formula 12> |
| 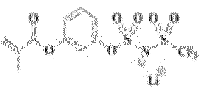 | 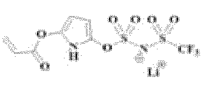 | 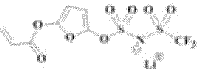 | 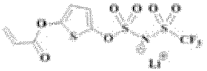 |
| <Structural Formula 13> | <Structural Formula 14> | <Structural Formula 15> | <Structural Formula 16> |
| 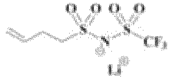 | 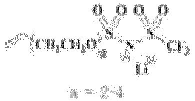 | 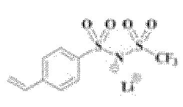 | 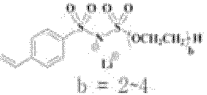 |
| <Structural Formula 17> | | | |
| 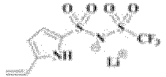 | | | |

In this case, the electrolyte additive may be contained in an amount of 5% by weight or less based on the total weight of the electrolyte composition.

Meanwhile, the negative electrode may be provided on at least one side of a negative electrode collector, and have a negative electrode active layer including a carbon-based negative electrode active material and a silicon-based negative electrode active material, and
the carbon-based negative electrode active material may include at least one carbon material of natural graphite, artificial graphite, expanded graphite, hard carbon, acetylene black, and Ketjen black.

Further, the silicon-based negative electrode active material may include at least one silicon material of silicon (Si), silicon carbide (SiC), and silicon oxide (SiO_{q}, provided that 0.8≤q≤2.5).

In this case, the silicon-based negative electrode active material is contained in an amount of 0.1 to 30% by weight based on the total weight of the negative electrode active material.

Furthermore, in an exemplary embodiment, the present invention provides a method for manufacturing a lithium secondary battery comprising: an electrode assembly comprising a positive electrode, a negative electrode, and a separator disposed between the positive electrode and negative electrode; and an electrolyte composition with which the electrode assembly is impregnated,
wherein the positive electrode comprises a positive electrode active layer arranged on at least one side of the positive electrode collector and comprising a lithium metal oxide represented by the following Formula 1 as a positive electrode active material;
wherein the electrolyte composition comprises a lithium salt and a non-aqueous organic solvent, the non-aqueous organic solvent comprising at least 60 wt% of a cyclic ester-based solvent represented by Formula 2, based on its total weight;
wherein the lithium secondary battery exhibits a heat flux of 6.0 W/g or less in the range of 200°C to 300°C when measured for a mixture comprising a positive electrode active material in a 100% charged state and an electrolyte composition in a 1:1 weight ratio:

   [Chemical Formula 1] Liₓ[Ni_{y}Co_{z}Mn_{w}M¹ᵥ]O₂

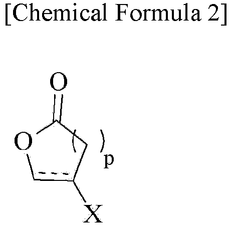

   in Formulas 1 and 2,
   M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
   x, y, z, w, and v satisfy 0.9≤x≤1.30, 0.6≤y<1, 0<z≤0.2, 0<w≤0.2, and 0≤v≤0.1, respectively, provided that y+z+w+v=1,
   - - - - represents a single bond or a double bond,
   X is hydrogen, fluorine, or vinyl; and
   p is an integer of 1 to 5.

### [Advantageous Effects]

The lithium secondary battery according to the present disclosure has excellent energy density by including an NCM-based positive electrode active material having a high content of nickel (Ni) in the positive electrode, while the safety problem caused by the positive electrode active material at high temperatures is improved by controlling the heat flow between the positive electrode active material and the electrolyte composition to a low level within a predetermined range at high temperatures.

### [Best Mode for Carrying out the Invention]

In the following detailed description, reference is made to the accompanying drawings, which form a part hereof.

However, the illustrative embodiments described in the detailed description, drawings, and claims are not meant to be limiting. Other embodiments may be utilized, and other changes may be made without departing from the spirit or scope of the subject matter presented here.

Terms such as "include" and "have" are intended to designate the presence of features, numerals, steps, operations, components, and parts described herein, or combinations thereof, but should not be interpreted to exclude the possibility of presence or addition of one or more other features, numerals, steps, operations, components, parts, or combinations thereof.

Further, in the present disclosure, when a part of a layer, film, region, or plate is described as being "on" the other part, this includes not only a case of being "directly on" the other part, but also a case where there is another part in between. Conversely, when a part of a layer, film, region, or plate is described as being "under" the other part, this includes not only a case of being "directly under" the other part, but also a case where there is another part in between. Furthermore, in the present disclosure, being disposed "on" may include being disposed below as well as above.

Further, in the present disclosure, "containing as a major component" may mean including 50% by weight or more (or 50% by volume or more), 60% by weight or more (or 60% by volume or more), 70% by weight or more (or 70% by volume or more), 80% by weight or more (or 80% by volume or more), 90% by weight or more (or 90% by volume or more), or 95% by weight or more (or 95% by volume or more) of the defined component based on the total weight (or total volume). For example, "containing a carbon-based negative electrode active material as a main component" means 50% by weight or more, 60% by weight or more, 70% by weight or more, or 80% by weight or more of the carbon-based negative electrode active material based on the total weight of the negative electrode active material. This may mean containing 90% by weight or more or 95% by weight or more, and in some cases, may mean that the negative electrode active material is made of 100% by weight of the carbon-based negative electrode active material.

Lithium secondary batteries are used as a power source for various electronic devices such as electric vehicles due to their high energy density and excellent output performance. In order to be used as a power source for such various electronic devices, electrochemical properties at high temperatures are required, and it is important to have thermal stability because the electrodes of the lithium secondary batteries cause an exothermic reaction with the electrolyte when exposed to high temperatures.

NCM-based compounds are considered to be the strongest candidates to replace negative electrode active materials such as LiCoO₂ due to their excellent overall properties such as high capacity, high rate characteristics, and good stability, as well as their low cost, which makes the NCM-based compounds applicable to small, medium, and large-scale batteries. However, the NCM-based compounds have disadvantages such as low ionic conductivity, low cycle performance and tap density, complex manufacturing processes, and a decrease in rate capability and capacity during charge and discharge when the ratio of nickel (Ni) is increased to achieve high capacity.

Two main causes of the decrease in electrochemical properties with increasing Ni content are side reactions and structure degradation. Among these, the side reactions are reactions in which lithium salts present on the particle surface of the NCM-based compound used as positive electrode active material react with the electrolyte in the battery to form an insulating material on the surface of the NCM-based compound, or Ni⁴⁺ ions accelerate electrolyte decomposition to form a thick solid-state electrolyte interface (SEI). Further, the structure degradation refers to a structural change (or collapse) of the layered structure due to the site exchange reaction (cation mixing) of Ni²⁺ and Li⁺ and the oxygen loss caused by the escape of oxygen radicals from the lattice. The structure degradation has a limitation in that the migration of Li ions is hindered during charging and discharging, thereby reducing electrochemical properties. For example, when the structure of the NCM-based active material is degraded at high temperatures, electrolyte decomposition occurs at the degraded site, and the oxidized carbon (CO or CO₂) in the electrolyte decomposition process produces water molecules in the process of combining with LiOH. These water molecules react with HF or LiF to generate a large amount of gas inside the battery at a high speed, thereby causing an explosion of the battery, which is a problem that makes the battery unsafe.

In order to solve the problem, a technology for coating the surface of the NCM-based compound has been developed in the art. However, the surface coating is limited by the need to perform an additional calcination process after the NCM-based active material is manufactured, which increase manufacturing costs, and makes it difficult to obtain a uniform coating layer to effectively suppress the structure degradation.

Therefore, it is necessary to develop a technology that is capable of improving the safety of secondary batteries by applying the NCM-based active materials with a high nickel (Ni) content to improve the energy density of secondary batteries while suppressing the structure degradation of the NCM-based active materials at high temperatures.

The lithium secondary battery according to the present disclosure has an improved energy density by including an NCM-based anode active material having a high content of nickel (Ni) in the positive electrode, and the safety problem caused by the positive electrode active material at a high temperature is improved by controlling the heat flow between the positive electrode active material and the electrolyte composition to a low level within a predetermined range at a high temperature.

Hereinafter, the present disclosure will be described in more detail.

### Lithium Secondary Battery

In an embodiment, the present disclosure provides a lithium secondary battery including:
an electrode assembly including a positive electrode, a negative electrode, and a separator disposed between the positive electrode and the negative electrode; and
an electrolyte composition with which the electrode assembly is impregnated,
wherein the positive electrode has a positive electrode active layer provided on at least one side of a positive electrode collector, and including, as a positive electrode active material, a lithium metal oxide represented by Formula 1,
wherein a heat flow is 6.0 W/g or less within a range of 200 °C to 300 °C as measured by a heat flow measurement for a mixture containing a 1:1 weight ratio of the positive electrode active material and the electrolyte composition in a 100% charged state:
   [Chemical Formula 1]

   Liₓ[Ni_{y}Co_{z}Mn_{w}M¹ᵥ]O₂ (1)

In Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v satisfy 0.9≤x≤1.30, 0.6≤y<1, 0<z≤0.2, 0<w≤0.2, and 0≤v≤0.1, respectively, provided that y+z+w+v=1.

A lithium secondary battery according to the present disclosure includes an electrode assembly having a structure in which a separator is disposed between a plurality of positive electrodes and a plurality of negative electrodes that are alternately stacked; and an electrolyte composition with which the electrode assembly is impregnated.

Here, the positive electrode included in the electrode assembly includes a positive electrode active layer on at least one side of a positive electrode collector, and the positive electrode active layer is a material capable of electrochemically reacting on the positive electrode collector to implement electrical activity, and contains, as a main component, a lithium metal oxide represented by Formula 1, which is capable of reversibly intercalating and deintercalating lithium ions.

The lithium metal oxide represented by Formula 1 is an oxide of lithium (Li) compounded with transition metal elements including nickel (Ni), cobalt (Co), and manganese (Mn), in which the content of nickel (Ni) is 60% or more of the total molar fraction of the transition metal elements (i.e., 60 mol% or more).

A ternary NCM-based negative electrode active material based on nickel (Ni), cobalt (Co), and manganese (Mn) combines the advantages of high capacity of LiNiO₂ (LNO), excellent electrochemical performance of LiCoO₂ (LCO), and stability of LiMn₂O₄ (LMO). However, despite the advantages, as the content of nickel (Ni) increases, a cation mixing occurs, which is a phenomenon in which Ni²⁺ (0.69 Å), which is similar in size to Li⁺ (0.76 Å), forms a lithium layer having a layered structure during the synthesis and/or charge/discharge process in a high temperature environment. The mixed Ni²⁺ forms a rock-salt structure of Ni-O with no local electrochemical reaction, which impedes the migration of lithium ions and thus adversely affects electrochemical performance such as high rate capability and discharge capacity. In addition, due to the structural instability, when charging and discharging the secondary battery under high temperature conditions, water molecules are generated along with the decomposition of the electrolyte, which rapidly generates a large amount of gas inside the battery, so the high temperature safety of the secondary battery is limited.

However, the present disclosure may solve this problem by including a nickel metal oxide represented by Formula 1, in which the content of nickel (Ni) as the positive electrode active material is 60% or more based on the total molar fraction of transition metal elements (i.e., 60 mol% or more), but reducing the heat flow between the positive electrode active material and the electrolyte composition at a high temperature to satisfy a predetermined range.

The term "heat flow" refers to an amount of heat flowing per unit weight, and may particularly indicate the degree of heat generation of a secondary battery. The electrolyte composition according to the present disclosure may have a high thermal stability, as compared to the electrolyte composition in the art, by showing a reaction difference between the positive electrode active material and the electrolyte composition under high temperature conditions as a result of a thermal analysis that simulates a degradation phenomenon in which the secondary battery spontaneously generates heat due to high temperature exposure or external mechanical factors, and the performance of the secondary battery regresses. For example, the heat flow measured according to the thermal analysis results represents the degree of heat (e.g., amount of heat) generated by the high temperature reaction between the electrolyte composition and the charged positive electrode active material when simulating the high temperature deterioration phenomenon of a secondary battery.

The heat flow may increase or decrease according to the type or content ratio of each component constituting the electrolyte composition, and may increase or decrease according to whether an inorganic positive electrode film containing lithium ions is formed on the surface of the positive electrode active layer. The reduction in heat flow indicates that the amount of heat generated between the positive electrode active material and the electrolyte composition is reduced. Therefore, under high temperature conditions, the positive electrode active material contained in the secondary battery may experience a delayed structural change (or collapse) of the layered structure due to i) the site exchange reaction (cation mixing) of Ni²⁺ and Li⁺ and ii) the oxygen loss caused by the escape of oxygen radicals from the lattice.

At this time, the heat flow between the positive electrode active material and the electrolyte composition according to the present disclosure may be 6.0 W/g or less within the range of 200 °C to 300 °C. More specifically, the heat flow may have an upper limit of 5.5 W/g or less, 5.0 W/g or less, 4.0 W/g or less, or 3.0 W/g or less, and a lower limit of more than 0 W/g, 0.5 W/g or more, 0.8 W/g or more, 1.0 W/g or more, or 2.0 W/g or more. In one example, the heat flow between the positive electrode active material and the electrolyte composition may be 0.5 W/g to 6.0 W/g, 0.5 W/g to 5 W/g, 0.5 W/g to 4.5 W/g, 0.5 W/g to 4.0 W/g, or 0.5 W/g to 3.5 W/g within the range of 200 °C to 300 °C. Here, the heat flow may be calculated under predetermined conditions. Each material has a unique heat conductivity constant, and the positive electrode active material and electrolyte composition may also have different heat conductivity constants. Due to such difference, the amount of heat transferred between the positive electrode active material and the electrolyte composition may vary according to the temperature conditions to which they are exposed. That is, the heat flow between the positive electrode active material and the electrolyte composition may vary according to the temperature conditions to which they are exposed. Therefore, the heat flow according to the present disclosure may be measured under predetermined measurement conditions, specifically, a temperature rise rate.

In one example, the heat flow between the positive electrode active material and the electrolyte composition may be measured using a differential scanning calorimeter (DSC) at a temperature rise condition of 10±1 °C/min in the range of 100 °C to 400 °C after mixing the positive electrode active material and the electrolyte composition charged with 100% SOC at 4.25 V in a 1:1 weight ratio.

Further, the positive electrode active material may be applied without limitation as long as the positive electrode active material is a lithium metal oxide represented by Formula 1, but more particularly, may include at least one selected from the group consisting of LiNi_{0.95}Co_{0.03}Mn_{0.02}O₂, LiNi_{0.9}Co_{0.06}Mn_{0.04}O₂, LiNi_{0.9}Co_{0.05}Mn_{0.05}O₂, LiNi_{0.85}Co_{0.1}Mn_{0.05}O₂, LiNi_{0.85}Co_{0.05}Mn_{0.1}O₂, LiNi_{0.8}Co_{0.1}Mn_{0.1}O₂, LiNi_{0.75}Co_{0.1}Mn_{0.15}O₂, LiNi_{0.7}Co_{0.2}Mn_{0.1}O₂, LiNi_{0.7}Co_{0.15}Mn_{0.15}O₂, LiNi_{0.7}Co_{0.1}Mn_{0.2}O₂, LiNi_{0.6}Co_{0.2}Mn_{0.2}O₂, LiNi_{0.6}Co_{0.2}Mn_{0.1}Al_{0.1}O₂, LiNi_{0.6}Co_{0.2}Mn_{0.15}Al_{0.05}O₂, and LiNi_{0.7}Co_{0.1}Mn_{0.1}Al_{0.1}O₂.

In addition, the electrolyte composition is a liquid electrolyte and includes a lithium salt and a non-aqueous organic solvent. Here, the composition of the non-aqueous organic solvent may be adjusted such that the lithium salt and the non-aqueous organic solvent contain a specific component in order to minimize transfer of heat energy outside the secondary battery to the positive electrode active material inside the secondary battery.

For example, the non-aqueous organic solvent may include, as a major component, a cyclic ester-based solvent represented by Formula 2:

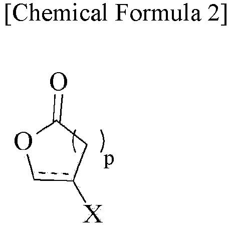

In Formula 2,
- - - - represents a single bond or a double bond,
X is hydrogen, fluorine, or vinyl; and
p is an integer of 1 to 5.

Specifically, the cyclic ester-based solvent represented by Formula 2 may include one or more of the cyclic ester-based compounds listed below:

| | |
|---|---|
| Dihydrofuranone: | Vinyl dihydrofuranone: |
| 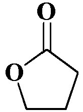 | 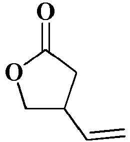 |
| Fluorodihydrofuranone: | Furanone: |
| 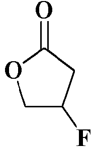 | 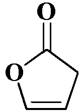 |
| Tetrahydropyranone: | Methyl dihydrofuranone: |
| 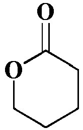 | 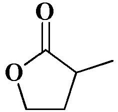 |
| Propyl tetrahydropyranone: | Oxepanone: |
| 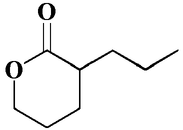 | 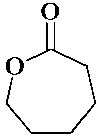 |

In general, cyclic ester solvents such as dihydrofuranone have good solubility in lithium salts, but when combined with boron-based lithium salts such as lithium bis(oxalato)borate (LiBOB, cation: Li⁺, anion: BF₂C₂O₄⁻) or imide-based lithium salts, the cycle characteristics of the secondary battery are reduced, thereby making it difficult to apply lithium secondary batteries. However, in the present disclosure, an excessive amount of a cyclic ester-based solvent represented by Formula 2 is contained as a non-aqueous solvent in the electrolyte composition, thereby minimizing the transfer of external heat to the positive electrode active material when the lithium secondary battery is exposed to a high temperature. Therefore, the high temperature safety of the lithium secondary battery may be improved.

At this time, the cyclic ester-based solvent may be contained in an amount of 60% by weight or more, for example, 70% by weight or more, 75% by weight or more, 80% by weight or more, or 85% by weight or more, 90% by weight or more, 60% by weight to 99% by weight, 70% by weight to 99% by weight, 80% by weight to 99% by weight, 90% by weight to 99% by weight, 95% by weight to 99% by weight, 60% by weight to 80% by weight, or 70% by weight to 90% by weight, based on the total weight of the non-aqueous solvent of the electrolyte composition. In some cases, the cyclic ester-based solvent may be applied per se as a non-aqueous solvent and included at 100% by weight based on the total weight of the non-aqueous solvent. By adjusting the content of the cyclic ester-based solvent contained in the non-aqueous solvent as described above, the present disclosure may prevent a problem that the heat transferred to the positive electrode active material during high temperature exposure of the lithium secondary battery is not sufficiently reduced when the content of the cyclic ester-based solvent is less than 60% by weight. Further, the cyclic ester-based solvent has excellent resistance to heat. Therefore, when the content of the non-aqueous organic solvent is adjusted to the above range, the electrolyte composition is not easily decomposed at a high temperature. In addition, when combined with the lithium salt according to the present disclosure, it is advantageous to minimize the amount of heat transferred to the positive electrode active material.

Further, the electrolyte composition may contain a certain lithium salt to reduce the amount of heat transferred to the positive electrode active material. Specifically, the lithium salt contains Li⁺ as a cation, and at least one anion selected from BF₄⁻, B₁₀Cl₁₀⁻, ClO₄⁻, AlO₄⁻, AlCl₄⁻, PF₆⁻, SbF₆⁻, AsF₆⁻, BF₂C₂O₄⁻, B(C₂O₄)₂⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻,CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and ((C(CN))₂NC(CF₃))N⁻.

The lithium salt basically imparts conductivity to the organic solvent that makes up the electrolyte, while inducing passivation of the negative electrode through SEI formation. In the present disclosure, the lithium salt is dissolved in the cyclic ester-based solvent and decomposes on the surface of the positive electrode when the lithium secondary battery is exposed to a high temperature, thereby performing a function of delaying the structure degradation of the positive electrode active material. To this end, the lithium salt applied in the present disclosure may optionally include the above-described lithium salt.

In one example, the lithium salt may contain Li⁺ as a cation, and an anion selected from BF₂C₂O₄⁻, B(C₂O₄)₂⁻, (CF₃SO₂)₂N⁻, (FSO₂)₂N⁻, (CF₃CF₂SO₂)₂N⁻, and ((C(CN))₂NC(CF₃))N⁻. In this case, the lithium salt may contain a borate group or a sulfonamide group as an anion, thereby increasing the heat resistance of the electrolyte composition containing the lithium salt. Further, the lithium salt contains a borate group or a sulfonamide group, so that a protective film may be formed through a reaction between the positive electrode active material and the electrolyte composition. Therefore, it is possible to implement an effect of significantly lowering the heat flow rate by delaying the structure degradation of the positive electrode.

In another example, the lithium salt may contain Li⁺ as a cation, and at least two anions selected from BF₄⁻, B₁₀Cl₁₀⁻, ClO₄⁻, AlO₄⁻, AlCl₄⁻, PF₆⁻, SbF₆⁻, AsF₆⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻,CF₃SO₃⁻, C₄F₉SO₃⁻, CF₃CF₂SO₃⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, and SCN⁻. In this case, the above-mentioned lithium salts are applied in a form of a bi-salt, which is a combination of heterogeneous salts, to exhibit a synergistic effect that significantly increases the heat flow reduction effectiveness of the electrolyte composition, which was insignificant when applied as a single component.

For example, LiPF₆, which exhibits PF₆⁻ as an anion upon dissociation, is a lithium salt commonly applied to the electrolyte composition of lithium secondary batteries, and has a characteristic of imparting high conductivity to a carbonate-based electrolyte. However, when LiPF₆ is applied alone as a lithium salt, it decomposes into PF₅ when exposed to a high temperature, for example, at about 200 °C or higher. It is very unstable and removes the positive electrode film, which is located on the surface of the positive electrode active layer and is derived from organic substances such as solvents and positive electrode active materials, thus reducing the high temperature durability of the positive electrode active material. However, LiBF₄ decomposes to BF₃ at about 300 °C or higher, so its decomposition temperature is higher than the decomposition temperature of the positive electrode active material. That is, LiBF₄ does not damage or remove the positive electrode film formed on the surface of the positive electrode active layer inside the secondary battery when exposed to a high temperature, so the high temperature durability of the positive electrode active material may be maintained. However, LiBF₄ has an insignificant effect in increasing the conductivity of the electrolyte composition, and when an electrolyte containing LiBF₄ is applied to a secondary battery, there is a limitation in that the performance of the negative electrode is reduced. These LiPF₆ and LiBF₄ have limitations when applied individually to an electrolyte composition. However, when applied together to a lithium salt in a form of a bi-salt, the LiPF₆ and LiBF₄ may implement an effect of significantly improving the low high-temperature safety of LiPF₆, as well as an effect of significantly reducing the heat flow through which the electrolyte composition transfers heat to the positive electrode active material.

In this case, when the lithium salts used in combination are a first lithium salt and a second lithium salt, the mixing ratio of the first lithium salt and the second lithium salt may be 1:0.5 to 2.0, specifically 1:0.5 to 1.5, or 1:0.8 to 1.2 based on molal concentration. By adjusting the ratio of the first lithium salt and the second lithium salt forming the bi-salt as described above, the present disclosure may maximize the effect of lowering the heat flow of the electrolyte composition while minimizing the disadvantages of each lithium salt.

The concentration of these lithium salts is not particularly limited, but the lower limit of the preferred concentration may be 0.5 mol/L or more, for example, 0.7 mol/L or more, or 0.9 mol/L or more, and the upper limit may be 2.5 mol/L or less, 2.0 mol/L or less, or 1.5 mol/L or less. When the concentration of the lithium salt is less than 0.5 mol/L, ionic conductivity decreases, which may reduce the cycle characteristics and output characteristics of the non-aqueous electrolyte battery. In addition, when the concentration of the lithium salt exceeds 2.5 mol/L, the viscosity of the electrolyte for the non-aqueous electrolyte battery increases, so that the ionic conductivity also decreases, which may reduce the cycle characteristics and output characteristics of the non-aqueous electrolyte battery.

In addition, when a large amount of lithium salt is dissolved in a non-aqueous organic solvent at once, the liquid temperature may rise due to the heat of dissolution of the lithium salt. In the case of a fluorine-containing lithium salt, when the temperature of the non-aqueous organic solvent rises significantly due to the heat of dissolution of the lithium salt, there is a risk of accelerated decomposition and the formation of hydrogen fluoride (HF). The hydrogen fluoride (HF) is undesirable because it causes degradation of battery performance. Therefore, the temperature at which the lithium salt is dissolved in the non-aqueous organic solvent is not particularly limited, but may be adjusted from -20 °C to 80 °C, and more particularly from 0 °C to 60 °C.

Further, the non-aqueous organic solvent may further contain, in addition to the ester-based solvent described above, one or more co-solvents selected from a fluorine-containing ether-based solvent, a fluorine-containing cyclic carbonate-based solvent, a linear carbonate-based solvent, a phosphate-based solvent, and a sulfone-based solvent.

For example, the fluorine-containing ether-based solvent may be 1,1,2,2-tetrafluoroethyl-2,2,3,3-tetrafluoropropyl ether (TTE), and the fluorine-containing cyclic carbonate-based solvent may be fluoroethylene carbonate (FEC). Further, the linear carbonate-based solvent may be ethyl methyl carbonate (EMC), dimethyl carbonate (DMC), or diethyl carbonate (DEC), the phosphate-based solvent may be trimethyl phosphate (TMP), and the sulfone-based solvent may be sulfolane, methyl sulfolane, or dimethyl sulfoxide. **In** some cases, the non-aqueous organic solvent may further include a cyclic carbonate solvent such as ethylene carbonate (EC).

The above-described co-solvents may improve the low-temperature performance of the electrolyte composition and may perform a function to prevent side reactions from being induced in the electrolyte composition to generate gas when exposed to a high temperature. Accordingly, from the viewpoint of electrochemical stability against oxidation and reduction and chemical stability against heat or reaction with solute, one type of co-solvent may be mixed alone with an ester solvent, or two or more types may be used in any combination according to the purpose.

Further, the co-solvent may be mixed with the ester-based solvent to satisfy a certain volume ratio. For example, the co-solvent may be contained in an amount of less than 40% by volume based on the total volume of the non-aqueous organic solvent, and more specifically, may be contained in an amount of 30% by volume or less, 20% by volume or less, 1% by volume to 30% by volume, 1% by volume to 20% by volume, 1% by volume to 10% by volume, 5% by volume to 15% by volume, 5% by volume to 20% by volume, 10% by volume to 20% by volume, 20% by volume to 30% by volume, 1% by volume 10% by volume, or 0.5% by volume to 5% by volume based on the total volume of the non-aqueous organic solvent.

The present disclosure may maintain high compatibility of the ester-based solvent and the co-solvent by adjusting the content of the co-solvent in the total non-aqueous organic solvent to the above ratio, and at the same time, may improve the performance of the battery by increasing the charge mobility and/or ion mobility of the battery.

In addition, the non-aqueous organic solvent may be further mixed with an organic solvent used in the art for the non-aqueous electrolyte for the purpose of reducing the viscosity at 25 °C of the electrolyte composition and improving the compatibility of the ester-based solvent and the co-solvent represented by Formula 2. At this time, the content of the organic solvent may be less than 10% by weight based on the total weight of the non-aqueous organic solvent in the electrolyte composition. Examples of miscible non-aqueous organic solvents include aprotic organic solvents such as N-methyl-2-pyrrolidinone, ethylene carbonate (EC), propylene carbonate, butylene carbonate, 1,2-dimethoxyethane (DME), tetrahydrofuran, 2-methyl tetrahydrofuran, formamide, dimethylformamide, dioxolane, acetonitrile, nitromethane, methyl formate, methyl acetate, phosphoric acid triesters, trimethoxymethane, 1,3-dimethyl-2-imidazolidinone, ether, methyl pyrophosphate, and ethyl propionate.

Furthermore, the electrolyte composition may further contain additives in addition to the basic components described above. As long as the gist of the present disclosure is not impaired, commonly used additives may be added to the non-aqueous electrolyte solution of the present disclosure in any ratio.

Specifically, in combination with the non-aqueous organic solvent and the lithium salt, the electrolyte composition may further contain an electrolyte additive represented by Formula 3:

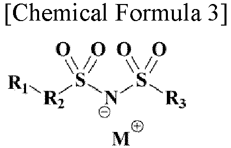

In Formula 3,
R₁ represents 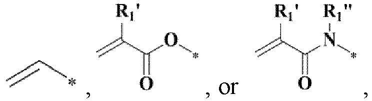
R₁' and R₁" independently represent hydrogen or a methyl group,
R₂ includes at least one of an arylene group having 6 to 20 carbon atoms; an aryleneoxy group having 6 to 20 carbon atoms; a heteroarylene group having 5 to 10 carbon atoms and at least one heteroatom of N, S, and O; a heteroaryleneoxy group having 5 to 10 carbon atoms and at least one heteroatom of N, S, and O; an alkylene group having 1 to 10 carbon atoms; an alkyleneoxy group having 1 to 10 carbon atoms; a cycloalkylene group having 5 to 10 carbon atoms; and 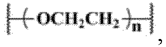
R₃ represents a fluoro group, an alkyl group having 1 to 10 carbon atoms, an alkoxy group having 1 to 10 carbon atoms, or 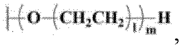
provided that at least one hydrogen atom contained in the alkylene group, alkyleneoxy group the alkyl group, alkoxy group, cycloalkylene group, 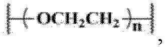 and 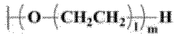 may be substituted with a fluorine atom,
M includes at least one selected from the group consisting of lithium, sodium, potassium, tetraalkylammonium having 1 to 4 carbon atoms, and tetraalkylphosphonium having 1 to 4 carbon atoms,
l is an integer of 1 to 6, and
m and n are independently an integer of 2 to 20.

The electrolyte additive includes an ionic compound having a parent nucleus centered on a sulfonylimide group to which a vinyl group, a (meth)acrylate group, or an acrylamide group is bonded on one side, through (i) a structure which includes a saturated hydrocarbon group or a saturated hydrocarbon group introduced with an oxygen atom, or (ii) A structure which extends the conjugation of a sulfonylimide group or has a polyglycol unit, as shown in Formula 3.

The electrolyte additive has the chemical structure represented by Formula 3, so that an organic and/or inorganic film may be uniformly formed on the surfaces of the positive electrode and negative electrode upon activation of the secondary battery. That is, the electrolyte additive may be directly included in the form of a single molecule in the organic and/or inorganic film formed on the surface of the positive electrode and/or negative electrode upon activation of the secondary battery. Thus, the electrolyte additive may inhibit side reactions between the positive electrode and/or negative electrode and the electrolyte composition, thereby improving the electrical performance of the secondary battery including the electrolyte additive.

To this end, in the compound represented by Formula 3,
R₂ is ethylene, propylene, cyclohexylene, phenylene, oxymethylene, pyrrole, oxyphenylene, oxynaphthalene, oxypyrrole, oxythiophenylene, oxypuranyl, or 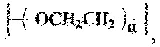
R₃ is a fluoro group, a methyl group, a fluoromethyl group, a methoxy group, a fluoromethoxy group, or 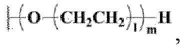 provided that at least one hydrogen atom contained in 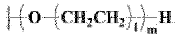 may be substituted with a fluorine atom,
M is lithium, l is an integer of 1 or 2, and m is an integer of 2 to 10.

In one example, the compound represented by Formula 3 includes one or more of compounds represented by Structural Formulas 1 to 17 below:

| | | | |
|---|---|---|---|
| <Structural Formula 1> | <Structural Formula 2> | <Structural Formula 3> | <Structural Formula 4> |
| 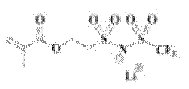 | 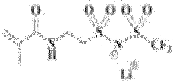 | 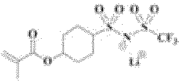 | 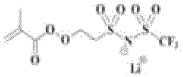 |
| <Structural Formula 5> | <Structural Formula 6> | <Structural Formula 7> | <Structural Formula 8> |
| 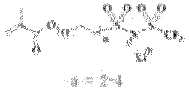 | 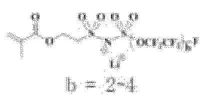 | 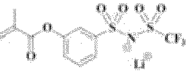 | 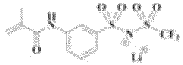 |
| <Structural Formula 9> | <Structural Formula 10> | <Structural Formula 11> | <Structural Formula 12> |
| 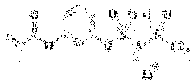 | 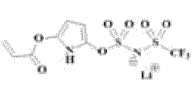 | 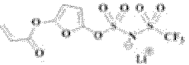 | 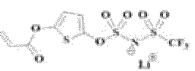 |
| <Structural Formula 13> | <Structural Formula 14> | <Structural Formula 15> | <Structural Formula 16> |
| 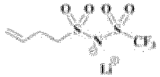 | 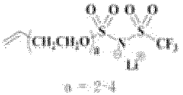 | 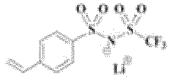 | 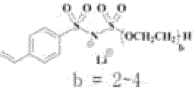 |
| <Structural Formula 17> | | | |
| 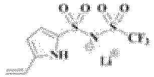 | | | |

The positive electrode active material containing lithium metal oxide represented by Formula 1 exhibits a higher electric potential during charging and discharging compared to a positive electrode active material such as lithium iron phosphate (LiFePO₄). In this regard, when the electrolyte additives represented by Structural Formulas 1 to 17 are applied to a lithium secondary battery together with the positive electrode active material such as lithium metal oxide represented by Formula 1, an organic and inorganic coating layer may be uniformly formed on the positive electrode and negative electrode surfaces, respectively, by the high charge and discharge potential of the positive electrode active material during the activation process of the secondary battery. The organic/inorganic coating layers formed in this way may effectively suppress side reactions occurring in the electrolyte composition when the secondary battery is exposed to a high temperature. Further, the electrolyte additive may easily increase the oxidation potential window of the electrolyte composition, thereby preventing decomposition of the electrolyte composition during charging and discharging of the secondary battery.

In one example, the electrolyte composition according to the present disclosure may have an oxidation potential window of 4.5V or higher. More specifically, the oxidation potential window of the electrolyte composition may exist in the range of 4.5V to 7.0V, 5.0V to 6.5V, 5.0V to 6.0V, 5.3V to 6.5V, or 5.5V to 6.0V.

The oxidation potential window refers to a range of voltage at which no additional electrochemical reaction occurs inside the secondary battery other than the electrochemical oxidation-reduction that occurs between the positive electrode and negative electrode, and the value of the Li/Li⁺ contrast is used here as a reference electrode. When the oxidation potential window of the electrolyte is outside the above range, the potential window is narrowed, so the non-aqueous electrolyte itself undergoes electrolysis as the battery is charged and discharged, thereby shortening the lifespan of the lithium secondary battery, and causing safety issues due to the generated gas. Meanwhile, when the electrolyte composition according to the present disclosure satisfies the range of the oxidation potential window described above, the electrolyte composition is stable with respect to the potential applied during charging and discharging of the secondary battery, so the lifespan of the battery may be improved and the risk of explosion may be reduced.

Further, the electrolyte additive may be contained in a specific amount in the electrolyte composition. Specifically, the electrolyte additive including the compound represented by Formula 3 may be 5% by weight or less, and particularly, 0.01% by weight to 5% by weight based on the total weight of the electrolyte composition. More specifically, the electrolyte additive may be included in an amount of 0.05% by weight to 3% by weight or 1.0% by weight to 2.5% by weight based on the total weight of the electrolyte composition. The present disclosure may prevent use of an excessive amount of the electrolyte additive outside the above range to increase the viscosity of the electrolyte composition and thereby reduce the wettability of the electrode and separator, while also preventing the ionic conductivity of the electrolyte composition from being reduced, thereby reducing battery performance. Further, the present disclosure prevents the effect of the additive from being insignificantly implemented due to the use of a trace amount of the electrolyte additive outside the above range.

The lithium secondary battery according to the present disclosure includes an electrolyte composition as described above, so that excellent high-temperature stability may be exhibited even when a lithium metal oxide having a nickel (Ni) content of 60% or more of the total molar fraction is contained as a positive electrode active material of the positive electrode.

Hereinafter, each component of the lithium secondary battery will be described in more detail.

The electrode assembly provided in the lithium secondary battery according to the present disclosure includes a positive electrode, a negative electrode, and a separator.

In this case, the positive electrode includes a positive electrode active layer prepared by applying, drying, and pressing a positive electrode slurry containing a positive electrode active material on at least one surface of a positive electrode collector.

As described above, the positive electrode active material contained in the positive electrode active layer includes lithium metal oxide represented by Formula 1 with a nickel (Ni) content of 60% or more of the total molar fraction, and has an advantage of being able to stably supply electricity of high capacity and/or high voltage electricity.

Further, the positive electrode active material may be included in an amount of 85 parts by weight or more, and more specifically, 90 parts by weight or more, 93 parts by weight or more, or 95 parts by weight or more based on the total weight of the positive electrode active layer.

In addition, the positive electrode active layer may further include a conductive material, binder, and other additives along with the positive electrode active material, if necessary.

In this case, the conductive material is used to improve the electrical performance of the positive electrode, and may be any material commonly used in the art. For example, the conductive material may include one or more selected from the group consisting of natural graphite, artificial graphite, carbon black, acetylene black, Denka black, Ketjen black, Super-P, channel black, furnace black, lamp black, summer black, graphene, and carbon nanotubes.

Additionally, the conductive material may be included in an amount of 0.1 to 5 parts by weight, and more particularly, 0.1 to 4 parts by weight, 2 to 4 parts by weight, 1.5 to 5 parts by weight, 0.5 to 3.5 parts by weight, 1 to 3 parts by weight, 0.1 to 2.5 parts by weight, 0.1 to 2 parts by weight, or 0.1 to 1 part by weight based on the total weight of the positive electrode active layer.

Further, the binder serves to bind the positive electrode active material, positive electrode additive, and conductive material to each other, and any binder that has this function may be used without being particularly limited. Specifically, the binder may include one or more resins selected from the group consisting of polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidene fluoride (PVdF).

Additionally, the binder may be included in an amount of 0.1 to 5 parts by weight, and more particularly, 0.1 to 4 parts by weight, 2 to 4 parts by weight, 1.5 to 5 parts by weight, 0.5 to 3.5 parts by weight, 1 to 3 parts by weight, 0.1 to 2.5 parts by weight, 0.1 to 2 parts by weight, or 0.1 to 1 part by weight based on the total weight of the positive electrode active layer.

The total thickness of the positive electrode active layer is not particularly limited, but may be specifically 50 µm to 300 µm, and more specifically 100 µm to 200 µm, 80 µm to 150 µm, 120 µm to 170 µm, 150 µm to 300 µm, 200 µm to 300 µm, or 150 µm to 190 µm.

Further, the positive electrode collector may be a positive electrode collector that has high conductivity without causing chemical changes in the battery. Examples of the positive electrode collector that may be used here may be stainless steel, aluminum, nickel, titanium, or calcined carbon, and in the case of aluminum or stainless steel, those subjected to surface treatment with carbon, nickel, titanium, or silver may also be used. In addition, the average thickness of the collector may be appropriately applied in the range of 3 µm to 500 µm in consideration of the conductivity and the total thickness of the positive electrode to be manufactured.

Furthermore, similarly to the positive electrode, the negative electrode includes a negative electrode active layer prepared by applying, drying, and pressing a negative electrode slurry containing a negative electrode active material on at least one surface of a negative electrode collector.

The negative electrode active layer may have a structure in which two individual layers are stacked according to the battery model or product use to which the negative electrode of the present disclosure is applied, but is not limited thereto.

For example, the negative electrode according to the present disclosure may have a structure in which a first negative electrode active layer is provided on a negative electrode collector, and a second negative electrode active layer is provided on the first negative electrode active layer. In this case, the first negative electrode active layer and the second negative electrode active layer each contain a negative electrode active material, and the negative electrode active material contained in each layer may be the same or different. When a two-layer negative electrode active layer is provided on the negative electrode collector, the composition of each negative electrode active layer may be easily controlled, so that an energy-efficient active material may be applied as the negative electrode active material to improve the electrical performance of the negative electrode, as well as to improve and/or prevent problems arising therefrom (e.g., deterioration of interfacial adhesion between the negative electrode collector and the negative electrode active layer).

In addition, the negative electrode active layer includes a carbon-based negative electrode active material to implement electrical activity through a reversible redox reaction during charging and discharging of the battery.

The carbon-based negative electrode active material refers to a material containing carbon atoms as a main component, and such carbon-based negative electrode active material may include graphite. The graphite may include any one or more of natural graphite and artificial graphite.

In one example, the carbon-based negative electrode active material may include mixed graphite, which is a mixture of natural graphite and artificial graphite. In this case, the mixed graphite may be a mixture of natural graphite and artificial graphite in a weight ratio of 10 to 50:50 to 90, or 10 to 30:70 to 90. By adjusting the content ratio of the natural graphite and the artificial graphite as described above, the mixed graphite may prevent the adhesion of the negative electrode collector and the negative electrode active layer from being reduced due to the natural graphite of less than 10 parts by weight based on the total weight, and may prevent the charge/discharge capacity of the negative electrode from being reduced due to the natural graphite of more than 50 parts by weight.

Further, the carbon-based negative electrode active material is not particularly limited in its form, but preferably has a form of a spherical graphite assembly formed by aggregating a plurality of flaky graphite. Examples of the flaky graphite includes, in addition to the natural graphite and the artificial graphite, those obtained by graphitizing mesophase calcined carbon (bulk mesophase) made from tar and pitch, and cokes (raw coke, green coke, pitch coke, needle coke, petroleum coke, etc.). In particular, the carbon-based negative electrode active material is preferably one assembled using a plurality of highly crystalline natural graphites. In addition, one graphite assembly may be formed by aggregating 2 to 100 pieces, preferably 3 to 20 pieces of flaky graphite.

Further, the carbon-based negative electrode active material may have an average particle diameter (D₅₀) of 0.5 µm to 20 µm, and more specifically, may have an average particle diameter (D₅₀) of 0.5 µm to 15 µm, 0.5 µm to 10 µm, 5 µm to 20 µm, 10 µm to 20 µm, 12 µm to 18 µm, 2 µm to 7 µm, 0.5 µm to 5 µm, or 1 µm to 3 µm.

It may be advantageous to make the average particle size of the carbon-based negative active material smaller in order to maximize the degree of disorder in the direction of expansion of each particle, thereby preventing expansion of the particles due to charging of lithium ions. However, when the particle size of graphite is less than 0.5 µm, a large amount of binder may be required due to an increase in the number of particles per unit volume. Meanwhile, when the average particle diameter exceeds 20 µm, the expansion becomes severe, and the cohesion between particles and the adhesion between particles and the collector decreases as the charging and discharging are repeated, which may significantly reduce the cycling characteristics.

Furthermore, the negative electrode according to the present disclosure may include a predetermined silicon-based negative electrode active material along with the carbon-based negative electrode active material in the negative electrode active layer. The silicon-based negative electrode active material is a material containing silicon (Si) as a main component, and may contain silicon (Si), silicon carbide (SiC), silicon monoxide (SiO), or silicon dioxide (SiO₂) either alone or in combination. When silicon monoxide (SiO) and silicon dioxide (SiO₂) are uniformly mixed or combined as the silicon-based negative electrode active material and included in the negative electrode active layer, these components may be expressed as silicon oxide (SiO_{q}, provided that 0.8≤q≤2.5).

Further, the negative electrode active material may be included in an amount of 85 parts by weight or more, and more specifically, 90 parts by weight or more, 93 parts by weight or more, or 95 parts by weight or more based on the total weight of the negative electrode active layer.

In addition, among these, the silicon-based negative electrode active material may be included in an amount of 0.1 to 30% by weight, and specifically 0.5 to 20% by weight, 1 to 9% by weight, 5 to 15% by weight, 3 to 7% by weight, 11 to 19% by weight, 13 to 17% by weight, 15 to 20% by weight, 10 to 30% by weight, 20 to 30% by weight, 15 to 25% by weight, or 9 to 22% by weight based on the total weight of the negative electrode active material. By adjusting the content of the carbon-based negative electrode active material and the silicon-based negative electrode active material included in the negative electrode active material to the range as described above, the present disclosure may improve the charge capacity per unit mass while reducing the lithium consumption and irreversible capacity loss during the initial charging and discharging of the secondary battery. Further, the structural stability of the negative electrode active layer may be improved by minimizing the volume change of the negative electrode active layer during charging and discharging of the secondary battery, thereby increasing the lifetime of the secondary battery.

Meanwhile, the negative electrode active layer according to the present disclosure may optionally further include a conductive material, binder, and other additives, as needed, along with the carbon-based anode active material as the main component.

The conductive material includes one or more types of carbon black such as acetylene black and Ketjen black; carbon nanotubes; and carbon fiber, but is not limited thereto.

In one example, the negative electrode active layer may include carbon black, carbon nanotubes, or carbon fiber as a conductive material either alone or in combination.

In this case, the content of the conductive material may be 0.1 to 10 parts by weight, and specifically, 0.1 to 8 parts by weight, 0.1 to 5 parts by weight, 0.1 to 3 parts by weight, 2 to 6 parts by weight, or It may be 0.5 to 2 parts by weight based on 100 parts by weight of the total negative electrode active layer. By controlling the content of the conductive material to the range as described above, the present disclosure may suppress the resistance of the negative electrode from increasing due to a low content of the conductive material, thereby reducing the charging capacity, and may prevent the content of the negative electrode active material from decreasing due to an excessive amount of the conductive material, thereby reducing the charging capacity, or prevent rapid charging characteristics from decreasing due to an increase in the loading amount of the negative electrode active layer.

In addition, the binder may be suitably applied as a component to assist in the bonding of the negative electrode active material and the conductive material to the collector, without degrading the electrical properties of the electrode. Specific examples of the binder include any one or more selected from the group consisting of vinylidene fluoride-hexafluoropropylene copolymer (PVDF-co-HFP), polyvinylidene fluoride (PVdF), polyacrylonitrile, poly(methyl methacrylate), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluororubber.

The content of the binder may be 0.1 to 10 parts by weight, and specifically 0.1 to 8 parts by weight, 0.1 to 5 parts by weight, 0.1 to 3 parts by weight, 2 to 6 parts by weight based on 100 parts by weight of the total negative electrode active layer. By controlling the content of the binder included in the negative electrode active layer to the above range, the present disclosure may prevent the adhesion of the active layer from deteriorating due to a low content of the binder or the electrical properties of the electrode from deteriorating due to an excessive amount of the binder.

Further, the average thickness of the negative electrode active layer may be 100 µm to 300 µm, more particularly 100 µm to 250 µm, 100 µm to 250 µm; or 130 µm to 190 µm, and the average thickness may be the same as the average thickness of the flat area. By adjusting the average thickness of the negative electrode active layer to the above range, the present disclosure may uniformly align the crystal faces of the carbon-based negative electrode active material included in each region, thereby improving the high-rate charging/discharging performance and energy density of the battery including the negative electrode.

Further, the negative electrode collector is not particularly limited as long as it has high conductivity without causing chemical changes in the battery, and examples thereof include copper, stainless steel, nickel, titanium, and calcined carbon. In the case of copper or stainless steel, those subjected to surface treatment with carbon, nickel, titanium, or silver may be used. In addition, the average thickness of the collector may be appropriately applied in the range of 1 µm to 500 µm in consideration of the conductivity and the total thickness of the negative electrode to be manufactured.

Meanwhile, the separator interposed between the positive electrode and negative electrode of each unit cell is an insulating thin film with high ion permeability and mechanical strength, and is not particularly limited as long as it is commonly used in the industry, but specific examples thereof include those containing one or more types of polymers selected from polypropylene, polyethylene, and polyethylene-propylene copolymer having chemical resistance and hydrophobicity. The separator may have a form of a porous polymer substrate such as a sheet or non-woven fabric containing the above-mentioned polymer. In some cases, the separator may have a form of a composite separator in which organic or inorganic particles are coated with an organic binder on the porous polymer substrate. In addition, the separator may have an average pore diameter of 0.01 µm to 10 µm and an average thickness of 5 µm to 300 µm.

Meanwhile, the lithium secondary battery according to the present disclosure is not particularly limited, but may be cylindrical, angular, pouch-type, or coin-type according to the purpose to be performed. The lithium secondary battery according to an embodiment of the present disclosure may be a pouch-type secondary battery.

### Method for preparing secondary battery

Furthermore, in an exemplary embodiment, the present invention provides
A method for preparing a lithium secondary battery comprising an electrode assembly comprising a positive electrode, a negative electrode, and a separator disposed between the positive electrode and negative electrode, and an electrolyte composition in which the electrode assembly is impregnated,
wherein the positive electrode has a positive electrode active layer provided on at least one side of a positive electrode collector, and including, as a positive electrode active material, a lithium metal oxide represented by Formula 1;
wherein the electrolyte composition contains a lithium salt and a non-aqueous organic solvent, the non-aqueous organic solvent containing, based on the total weight of the non-aqueous organic solvent, 60% by weight or more of a cyclic ester-based solvent represented by Formula 2;
wherein a heat flow is 6.0 W/g or less within a range of 200 °C to 300 °C as measured by a heat flow measurement for a mixture containing a 1:1 weight ratio of the positive electrode active material in a 100% charged state and the electrolyte composition:

   [Chemical Formula 1] Liₓ[Ni_{y}Co_{z}Mn_{w}M¹ᵥ]O₂

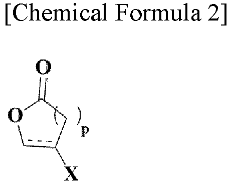

   In Formulas 1 and 2,
   M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
   x, y, z, w, and v satisfy 0.9≤x≤1.30, 0.6≤y<1, 0<z≤0.2, 0<w≤0.2, and 0≤v≤0.1, respectively, provided that y+z+w+v=1,
   - - - - represents a single bond or a double bond,
   X is hydrogen, fluorine, or vinyl, and
   p is an integer of 1 to 5.

A method of preparing a lithium secondary battery according to the present invention refers to a method of preparing a lithium secondary battery of the present invention as described above. The method comprises the step of impregnating an electrode assembly comprising a positive electrode, a negative electrode and a separator disposed between the positive electrode and negative electrode with an electrolyte composition. The electrode assembly has the advantage that the positive electrode of the electrode assembly comprises an NCM-based positive electrode active material having a high content of nickel (Ni), and that the electrolyte composition has the effect of reducing the heat flow rate between the positive electrode active material and the electrolyte composition at high temperatures to a predetermined range, thereby improving the safety problems caused by the positive electrode active material at high temperatures.

The specific description of the positive electrode active material and the electrolyte composition is the same as described above, so specific description is omitted.

Hereinafter, the present disclosure will be described in more detail by way of examples and experimental examples.

However, the following examples and experimental examples are only illustrative of the present disclosure, and the content of the present invention is not limited to the following examples and experimental examples.

### Preparation Examples 1 to 17. Preparation of Electrolyte Composition for Lithium Secondary Battery

As non-aqueous solvents, dihydrofuranone (DHF), ethylene carbonate (EC), and ethylmethyl carbonate (EMC) were prepared, and as lithium salts, LiPF₆, LiBF₄, LiN(FSO₂)₂, and LiBF₂(CO₂)₂ were prepared.

Each prepared lithium salt was dissolved in a non-aqueous organic solvent at a concentration of 1.0 M (≈1.0 mol/L) at 30 °C to 40 °C, and an electrolyte additive was added in an amount of 2.0% by weight based on the total weight of the electrolyte composition to prepare an electrolyte composition. The composition of the non-aqueous organic solvent, the lithium salt, and the type of electrolyte additive used here are shown in Table 1 below.

**[Table 1]**

| Preparation Example | Composition of non-aqueous organic solvent [vol.%] | Composition of lithium salt [M] | Electrolyte additive |
|---|---|---|---|
| 1 | FDHF=100 | LiFSI | - |
| 2 | DHF=100 | LiFSI | - |
| 3 | DHF=100 | LiFSI | 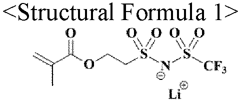 |
| 4 | DHF=100 | LiODFB | - |
| 5 | DHF=100 | LiPF₆:LiBF₄=1:1 | - |
| 6 | DHF:FEC=90:10 | LiFSI | - |
| 7 | DHF:EMC=90:10 | LiFSI | - |
| 8 | DHF:EMC=60:40 | LiFSI | - |
| 9 | DHF=100 | LiPF₆:LiBF₄=1:0.1 | - |
| 10 | DHF=100 | LiPF₆:LiBF₄=1:5 | - |
| 11 | DHF:EMC=40:60 | LiFSI | - |
| 12 | DHF=100 | LiPF₆ | - |
| 13 | DHF=100 | LiBF₄ | - |
| 14 | EC:EMC=30:70 | LiFSI | - |
| 15 | EC:EMC=30:70 | LiODFB | - |
| 16 | EC:EMC=30:70 | LiPF₆ | - |
| 17 | EC:EMC=30:70 | LiBF₄ | - |
| DHF: dihydrofuranone | | | |
| FDHF: fluorodihydrofuranone | | | |
| EMC: ethyl methyl carbonate | | | |
| FEC: fluoroethylene carbonate | | | |
| LiFSI: lithium bis(trifluoromethanesulfonyl)imide, LiN(FSO₂)₂ | | | |
| LiODFB: lithium difluoro(oxalato)borate, LiBF₂(CO₂)₂ | | | |

### Examples 1-8 and Comparative Examples 1-9. Preparation of Lithium Secondary Batteries

LiNi_{0.86}Co_{0.05}Mn_{0.07}Al_{0.02}O₂ having a particle size of 5 µm was prepared as a positive electrode active material and mixed with polyvinylidene fluoride as a binder and a carbon-based conductive material in a weight ratio of 94:3:3 in N-methylpyrrolidone (NMP) to prepare a positive electrode slurry with a solid content of 45%. The prepared positive electrode slurry was cast on a thin aluminum plate, dried in a 120°C vacuum oven, and rolled to prepare a positive electrode having a positive electrode active layer with a thickness of 160 µm.

Separately, a negative electrode active material was prepared by mixing a carbon-based negative electrode active material consisting of natural graphite and artificial graphite in a weight ratio of 3:7 and a silicon-based negative electrode active material containing SiO₂, in a weight ratio of 88:12. A negative electrode slurry with a solid content of 40% was prepared by mixing 97 parts by weight of the prepared negative electrode active material and 3 parts by weight of styrene butadiene rubber (SBR) with water. The negative electrode slurry was cast onto a copper sheet, dried in a 130°C vacuum oven, and rolled to prepare a negative electrode having a negative electrode active layer with a thickness of 180 µm.

A separator made of polypropylene of 18 µm was interposed between the obtained positive and negative electrodes, inserted into a case, and then the electrolyte composition prepared in the preparation example was injected as shown in Table 2 below to assemble a lithium secondary battery.

Initial charging was performed on each assembled lithium secondary battery. Specifically, an activated lithium secondary battery was manufactured by initially charging the lithium secondary battery to a charging end voltage of 4.2V at 55±2 °C under the conditions shown in Table 2 below.

**[Table 2]**

| | Type of Electrolyte Composition |
|---|---|
| Example 1 | Electrolyte Composition of Preparation Example 1 |
| Example 2 | Electrolyte Composition of Preparation Example 2 |
| Example 3 | Electrolyte Composition of Preparation Example 3 |
| Example 4 | Electrolyte Composition of Preparation Example 4 |
| Example 5 | Electrolyte Composition of Preparation Example 5 |
| Example 6 | Electrolyte Composition of Preparation Example 6 |
| Example 7 | Electrolyte Composition of Preparation Example 7 |
| Example 8 | Electrolyte Composition of Preparation Example 8 |
| Comparative Example 1 | Electrolyte Composition of Preparation Example 9 |
| Comparative Example 2 | Electrolyte Composition of Preparation Example 10 |
| Comparative Example 3 | Electrolyte Composition of Preparation Example 11 |
| Comparative Example 4 | Electrolyte Composition of Preparation Example 12 |
| Comparative Example 5 | Electrolyte Composition of Preparation Example 13 |
| Comparative Example 6 | Electrolyte Composition of Preparation Example 14 |
| Comparative Example 7 | Electrolyte Composition of Preparation Example 15 |
| Comparative Example 8 | Electrolyte Composition of Preparation Example 16 |
| Comparative Example 9 | Electrolyte Composition of Preparation Example 17 |

### Experimental Example.

The following experiment was performed to evaluate the safety and charging/discharging performance of the lithium secondary battery according to the present disclosure.

### 1) Measurement of heat flow between positive electrode active material and electrolyte composition

For each lithium secondary battery prepared in the Examples and Comparative Examples, the lithium secondary batteries were fully charged to 4.25 V at a rate of 0.5 C at 25 °C under constant current (CC)-constant voltage (CV) conditions, and the fully charged lithium secondary batteries were disassembled and the positive electrode active material LiNi_{0.86}Co_{0.05}Mn_{0.07}Al_{0.02}O₂ and the electrolyte composition were weighed and mixed in a 1:1 weight ratio.

A sample was prepared by injecting the prepared mixture into a sample can of a differential scanning calorimeter (DSC), and the heat flow of the prepared sample was measured. In this case, the heat flow was measured in a range of 100 °C to 350 °C while increasing the temperature at a temperature rise rate of 10±0.1 °C/min.

From the measured results, the heat flow between the positive electrode active material and the electrolyte composition contained in each lithium secondary battery was evaluated, and when there were two or more valid heat flow peaks within the temperature range of 100 °C to 350 °C among the measured results, the value of the peak with the largest heat flow was determined as the corresponding heat flow. The results are shown in Table 3 below.

### 2) Thermal runaway test evaluation

The lithium secondary batteries prepared in the Examples and Comparative Examples were each charged under constant current (CC) conditions maintained at 1.25 A until 4.2 V was reached at 25 °C, and then maintained at 4.2 V. Upon completion of charging, the lithium secondary batteries were activated by discharging at constant current (CC) conditions maintained at 1.25 A until 2.85 V. Afterwards, each activated lithium secondary battery was allowed to rest for 6 hours at 25 °C.

Then, the lithium secondary batteries were fully charged under constant current (CC) conditions maintained at 1.25 A until 4.2 V is reached at 25 °C, and a thermal runaway test was performed using an accelerating rate calorimetry (ARC). At this time, the accelerating rate calorimeter (ARC) was obtained from THT (Thermal Hazard Technology), and a thermal runaway test was performed using the heat-wait-search (HWS) method. In the heat-wait-search (HWS) method, the temperature of the insulated oven chamber with each lithium secondary battery was heated from 50 °C to 190 °C by raising 5 °C at a rate of 10 °C/min and waiting 10 minutes. Here, when the lithium secondary battery exhibited a temperature change of 0.02 °C/min or more when waiting 10 minutes for each lithium secondary battery at an elevated temperature, it is recognized that self-heating corresponding to thermal runaway (TR) was in progress, and from then on, no additional thermal energy was applied to change the temperature by self-heating of each secondary battery. After self-heating of the secondary battery, the self-heating profile of the secondary battery was measured, and the maximum temperature of the secondary battery was calculated from the measured self-heating profile. The results are shown in Table 3 below.

**[Table 3]**

| | Heat flow [W/g] | Maximum Temperature in Thermal Runaway Test [°C] |
|---|---|---|
| Example 1 | 2.5±0.1 | 251.7 |
| Example 2 | 2.4±0.1 | 253.2 |
| Example 3 | 2.6±0.1 | 247.0 |
| Example 4 | 2.7±0.1 | 254.5 |
| Example 5 | 4.9±0.1 | 271.8 |
| Example 6 | 2.9±0.1 | 258.8 |
| Example 7 | 3.0±0.1 | 260.3 |
| Example 8 | 3.5±0.1 | 272.1 |
| Comparative Example 1 | 6.5±0.1 | 451.7 |
| Comparative Example 2 | 6.8±0.1 | 319.5 |
| Comparative Example 3 | 7.0±0.1 | 323.6 |
| Comparative Example 4 | 7.2±0.1 | 468.6 |
| Comparative Example 5 | 7.0±0.1 | 299.9 |
| Comparative Example 6 | 7.4±0.1 | 324.9 |
| Comparative Example 7 | 7.7±0.1 | 337.4 |
| Comparative Example 8 | 30.5±0.2 | 513.8 |
| Comparative Example 9 | 7.9±0.1 | 347.2 |

By controlling the heat flow between the positive electrode active material and the electrolyte composition to a predetermined range, the lithium secondary battery according to the present disclosure may be found to have excellent high temperature safety and battery life despite including an NCM-based positive electrode active material having a high content of nickel (Ni) in the positive electrode, which is more than 80% of the total molar fraction of transition metal elements.

For example, the lithium secondary batteries of Examples in which the heat flow between the positive electrode active material and the electrolyte composition was 6 W/g or less showed a low maximum temperature of less than about 275 °C in the thermal runaway test.

Meanwhile, the lithium secondary batteries of Comparative Examples in which the heat flow between the positive electrode active material and the electrolyte composition exceeded 6 W/g showed a high maximum temperature of about 299 °C or more in the thermal runaway test.

This indicates that when the heat flow rate between the positive electrode active material and the electrolyte composition is adjusted to below a predetermined range, it is possible to suppress damage to the positive electrode, such as structure degradation, and prevent a significant increase in the temperature of the secondary battery at high temperatures, even for NCM-based active material containing a high content of nickel (Ni) and having low structural stability at high temperatures.

From the results, it is found that the lithium secondary battery according to the present disclosure has excellent energy density by including an NCM-based anode active material having a high content of nickel (Ni) in the positive electrode, while the safety problem caused by the positive electrode active material at a high temperature is improved by controlling the heat flow between the positive electrode active material and the electrolyte composition to a low level within a predetermined range.

From the foregoing, it will be appreciated that various embodiments of the present disclosure have been described herein for purposes of illustration, and that various modifications may be made without departing from the scope and spirit of the present disclosure.

Accordingly, the various embodiments disclosed herein are not intended to be limiting, with the true scope and spirit being indicated by the following claims.

## Claims

1. A secondary battery comprising:
an electrode assembly including a positive electrode, a negative electrode, and a separator disposed between the positive electrode and the negative electrode; and
an electrolyte composition with which the electrode assembly is impregnated,
wherein the positive electrode has a positive electrode active layer provided on at least one side of a positive electrode collector, and including, as a positive electrode active material, a lithium metal oxide represented by Formula 1;
wherein the electrolyte composition contains a lithium salt and a non-aqueous organic solvent, the non-aqueous organic solvent containing, based on the total weight of the non-aqueous organic solvent, 60% by weight or more of a cyclic ester-based solvent represented by Formula 2;
wherein a heat flow is 6.0 W/g or less within a range of 200 °C to 300 °C as measured by a heat flow measurement for a mixture containing a 1:1 weight ratio of the positive electrode active material in a 100% charged state and the electrolyte composition:
[Chemical Formula 1] Liₓ[Ni_{y}Co_{z}Mn_{w}M¹ᵥ]O₂ 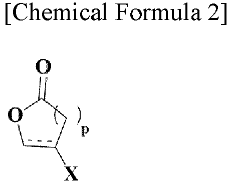
in Formulas 1 and 2,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v satisfy 0.9≤x≤1.30, 0.6≤y<1, 0<z≤0.2, 0<w≤0.2, and 0≤v≤0.1, respectively, provided that y+z+w+v=1,
- - - - represents a single bond or a double bond,
X is hydrogen, fluorine, or vinyl, and
p is an integer of 1 to 5.

2. The secondary battery according to claim 1, wherein the positive electrode active material includes at least one of LiNi_{0.95}Co_{0.03}Mn_{0.02}O₂, LiNi_{0.9}Co_{0.06}Mn_{0.04}O₂, LiNi_{0.9}Co_{0.05}Mn_{0.05}O₂, LiNi_{0.85}Co_{0.1}Mn_{0.05}O₂, LiNi_{0.85}Co_{0.05}Mn_{0.1}O₂, LiNi_{0.8}Co_{0.1}Mn_{0.1}O₂, LiNi_{0.75}Co_{0.1}Mn_{0.15}O₂, LiNi_{0.7}Co_{0.2}Mn_{0.1}O₂, LiNi_{0.7}Co_{0.15}Mn_{0.15}O₂, LiNi_{0.7}Co_{0.1}Mn_{0.2}O₂, LiNi_{0.6}Co_{0.2}Mn_{0.2}O₂, LiNi_{0.6}Co_{0.2}Mn_{0.1}Al_{0.1}O₂, LiNi_{0.6}Co_{0.2}Mn_{0.15}Al_{0.05}O₂, and LiNi_{0.7}Co_{0.1}Mn_{0.1}Al_{0.1}O₂.

3. The secondary battery according to claim 1, wherein the cyclic ester-based solvent represented by Formula 2 contains one or more of dihydrofuranone, vinyl dihydrofuranone, fluorodihydrofuranone, furanone, tetrahydropyranone, methyl dihydrofuranone, propyl tetrahydropyranone, and oxepanone.

4. The secondary battery according to claim 1, wherein the lithium salt contains Li⁺ as a cation, and at least one anion selected from BF₄⁻, B₁₀Cl₁₀⁻, ClO₄⁻, AlO₄⁻, AlCl₄⁻, PF₆⁻, SbF₆⁻, AsF₆⁻, BF₂C₂O₄⁻, B(C₂O₄)₂⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻,CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and ((C(CN))₂NC(CF₃))N⁻.

5. The secondary battery according to claim 1, wherein the lithium salt contains Li⁺ as a cation, and an anion selected from BF₂C₂O₄⁻, B(C₂O₄)₂⁻, (CF₃SO₂)₂N⁻, (FSO₂)₂N⁻, (CF₃CF₂SO₂)₂N⁻, and ((C(CN))₂NC(CF₃))N⁻.

6. The secondary battery according to claim 1, wherein the lithium salt contains Li⁺ as a cation, and at least two anions selected from BF₄⁻, B₁₀Cl₁₀⁻, ClO₄⁻, AlO₄⁻, AlCl₄⁻, PF₆⁻, SbF₆⁻, AsF₆⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, (C₂O₄)₂PF₂⁻, CF₃SO₃⁻, C₄F₉SO₃⁻, CF₃CF₂SO₃⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, and SCN⁻.

7. The secondary battery according to claim 1, wherein
the non-aqueous organic solvent further contains at least one co-solvent selected from a fluorinated ether-based solvent, a fluorinated cyclic carbonate-based solvent, a linear carbonate-based solvent, a phosphate-based solvent, and a sulfone-based solvent.

8. The secondary battery according to claim 1, wherein the electrolyte composition further contains an electrolyte additive represented by Formula 3: 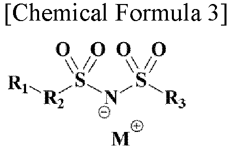
wherein, R₁ represents 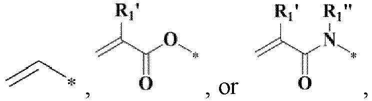
R₁' and R₁" independently represent hydrogen or a methyl group,
R₂ includes at least one of an arylene group having 6 to 20 carbon atoms; an aryleneoxy group having 6 to 20 carbon atoms; a heteroarylene group having 5 to 10 carbon atoms and at least one heteroatom of N, S, and O; a heteroaryleneoxy group having 5 to 10 carbon atoms and at least one heteroatom of N, S, and O; an alkylene group having 1 to 10 carbon atoms; an alkyleneoxy group having 1 to 10 carbon atoms; a cycloalkylene group having 5 to 10 carbon atoms; and 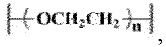
R₃ represents a fluoro group, an alkyl group having 1 to 10 carbon atoms, an alkoxy group having 1 to 10 carbon atoms, or 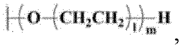
provided that at least one hydrogen atom contained in the alkylene group, the alkyleneoxy group, the alkyl group, alkoxy group, cycloalkylene group, 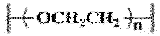 , and 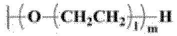 is not substituted or is substituted with a fluorine atom,
M includes at least one selected from the group consisting of lithium, sodium, potassium, tetraalkylammonium having 1 to 4 carbon atoms, and tetraalkylphosphonium having 1 to 4 carbon atoms,
l is an integer of 1 to 6, and
m and n are independently an integer of 2 to 20.

9. The secondary battery according to claim 8, wherein the electrolyte additive represented by Formula 3 includes one or more of compounds represented by Structural Formulas 1 to 17 below:
| | | | |
|---|---|---|---|
| <Structural Formula 1> | <Structural Formula 2> | <Structural Formula 3> | <Slructural Formula 4> |
| 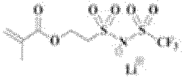 | 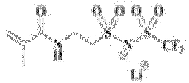 | 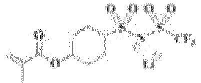 | 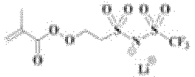 |
| <Structural Formula 5> | <Structural Formula 6> | <Structural Formula 7> | <Structural Formula 8> |
| 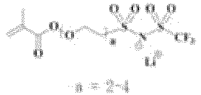 | 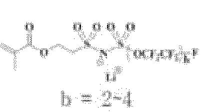 | 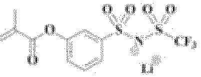 | 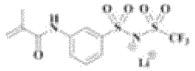 |
| <Structural Formula 9> | <Structural Formula 10> | <Structural Formula 11> | <Structural Formula 12> |
| 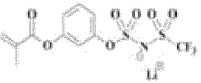 | 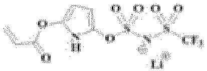 | 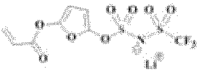 | 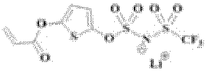 |
| <Structural Formula 13> | <Structural Formula 14> | <Structural Formula 15> | <Structural Formula 16> |
| 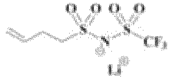 | 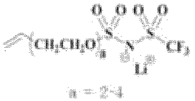 | 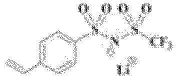 | 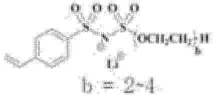 |
| <Structural Formula 17> | | | |
| 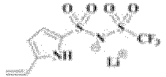 | | | |

10. The secondary battery according to claim 8, wherein the electrolyte additive is contained in an amount of 5% by weight or less based on the total weight of the electrolyte composition.

11. The secondary battery according to claim 1, wherein the negative electrode has a negative electrode active layer provided on at least one side of a negative electrode collector, and including a carbon-based negative electrode active material and a silicon-based negative electrode active material, and
the carbon-based negative electrode active material includes at least one carbon material of natural graphite, artificial graphite, expanded graphite, hard carbon, acetylene black, and Ketjen black.

12. The secondary battery according to claim 11, wherein the silicon-based negative electrode active material includes at least one silicon material of silicon (Si), silicon carbide (SiC), and silicon oxide SiO_{q}, wherein 0.8≤q≤2.5.

13. The secondary battery according to claim 11, wherein the silicon-based negative electrode active material is contained in an amount of 0.1 to 30% by weight based on the total weight of the negative electrode active material.

14. A method for preparing a secondary battery, the method comprising:
preparing an electrode assembly including a positive electrode, a negative electrode, and a separator disposed between the positive electrode and the negative electrode; and
impregnating the electrode assembly in an electrolyte composition,
wherein the positive electrode has a positive electrode active layer provided on at least one side of a positive electrode collector, and including, as a positive electrode active material, a lithium metal oxide represented by Formula 1;
wherein the electrolyte composition contains a lithium salt and a non-aqueous organic solvent, the non-aqueous organic solvent containing, based on the total weight of the non-aqueous organic solvent, 60% by weight or more of a cyclic ester-based solvent represented by Formula 2;
wherein a heat flow is 6.0 W/g or less within a range of 200 °C to 300 °C as measured by a heat flow measurement for a mixture containing a 1:1 weight ratio of the positive electrode active material in a 100% charged state and the electrolyte composition:
[Chemical Formula 1] Liₓ[Ni_{y}Co_{z}Mn_{w}M¹ᵥ]O₂ 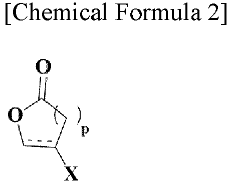
in Formulas 1 and 2,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v satisfy 0.9≤x≤1.30, 0.6≤y<1, 0<z≤0.2, 0<w≤0.2, and 0≤v≤0.1, respectively, provided that y+z+w+v=1,
---- represents a single bond or a double bond,
X is hydrogen, fluorine, or vinyl, and
p is an integer of 1 to 5.
